# EUROPÄISCHE PATENTSCHRIFT

(11) **EP 0 415 297 B1**
(45) Veröffentlichungstag und Bekanntmachung des Hinweises auf die Patenterteilung: **24.03.1993**
(21) Anmeldenummer: 90116324.6
(22) Anmeldetag: 25.08.1990
(51) Int. Cl.: F16L 11/12

(54) **Extrudierter, knickfester, durchsteckmontierbarer Abfluss- bzw. Lüftungsschlauch zur Verlegung in Hohlräumen von Kraftfahrzeug-Karosserien**
Extruded non-buckling passing-through mountable discharge respectively ventilation hose for installation in cavities of automotive bodies
Tube souple d'écoulement respectivement de ventilation extrudé, à l'épreuve de flambage, montable par passage à travers dans cavités de carrosseries d'automobile

(30) Priorität: 01.09.1989 DE 3929051
(43) Veröffentlichungstag der Anmeldung: 06.03.1991
(73) Patentinhaber: KUNSTSTOFFWERK VOERDE HUECK & SCHADE, D-58256 Ennepetal (DE)
(72) Erfinder: Weinheimer, Heinz-Jürgen, D-5800 Hagen 7 (DE)
(74) Vertreter: Ostriga, Harald

(56) Entgegenhaltungen:
- DE-A- 1 525 421
- DE-C- 159 143
- FR-A- 2 313 623
- FR-A- 2 395 481
- LU-A- 82 956
- US-A- 3 720 235
- US-A- 4 410 012

## Beschreibung

Die Erfindung betrifft einen extrudierten knickfesten durchsteckmontierbaren Abfluß- bzw. Lüftungsschlauch aus PVC oder aus einem ähnlichen Thermoplast, zur Verlegung in Hohlräumen von Beförderungsmitteln, insbesondere von Kraftfahrzeug-Karosserien, wobei der Außenmantelfläche des Schlauchköpers sich in dessen Längsrichtung erstreckende, im wesentlichen radial nach außen vorragende, im Verhältnis zur Schlauchkörper-Wandung dünnwandige Rippen angeformt sind.

Der vorbeschriebene Abfluß- bzw. Lüftungsschlauch ist durch offenkundige Vorbenutzung bekanntgeworden.

Im Unterschied zu dem vorbeschriebenen Schlauch verwendet man bis auf den heutigen Tag vornehmlich außen glatte Schläuche aus Weich-PVC, welche wegen Ihrer Härte von etwa 85-90 Shore A zwar in Grenzen biegsam sind, andererseits aber eine für eine Durchsteckmontage hinreichende Knickfestigkeit aufweisen. Und zwar müssen derartige Schläuche durch ansonsten von außen unzugängliche, zumeist langgestreckte Karosseriehohlräume hindurchgesteckt bzw. hindurchgeschoben werden, was eine hinreichende Knickfestigkeit und eine gewisse Gängigkeit beim Einschieben erfordert.

Da diese glatten PVC-Schläuche aber durch Anschlagen an Karosseriebereiche lästige Klappergeräusche verursachen, werden diese Schläuche an besonders geräuschgefährdeten Stellen abschnittsweise mit einer selbsthaftenden Filzbandage versehen. Das Anbringen derartiger Filzbandagen ist mit einem erhöhten Arbeitsaufwand verbunden, den man mit dem eingangs beschriebenen extrudierten außenberippten Abfluß- bzw. Lüftungsschlauch dieser Gattung vermeiden will. Jene mit dem Schlauchkörper werkstoffeinheitlich extrudierten dünnwandigen äußeren Axialrippen wirken einem Klappern kaum entgegen, jedoch behindern diese Rippen die Durchsteckmontage. Und zwar ist der Durchsteckwiderstand so groß, daß sich der außenberippte Abfluß- bzw. Lüftungsschlauch nicht in der Praxis durchsetzen konnte, die sich deshalb überwiegend nach wie vor des glatten und abschnittsweise mit Filzbandagen versehenen PVC-Schlauchs bedient.

Aus der FR-A-23 95 481 ist außerdem ein extrudierter Schlauch mit Rippen bekannt, jedoch bestehen bei diesem Schlauch der Schlauchkörper und die Rippen aus demselben Material.

Des weiteren ist aus der DE-A-15 25 421 ein ringförmiger Schlauch aus Kunststoff bekannt, der drei radial nach außen weisende Erhöhungen aufweist, die den Widerstand gegen ein Zusammendrücken des Schlauches bei erhöhtem Außendruck vergrößern sollen.

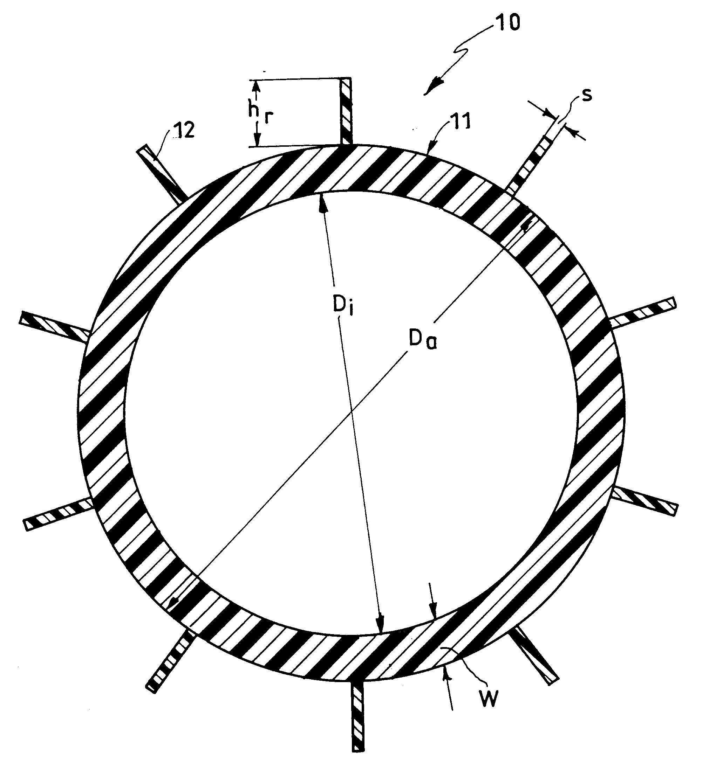

Aus der DE-C-15 91 43 ist ein Gummischlauch mit am Außenumfang angeordneten dünnen Rippen bekannt (Fig. 5), wobei die aus demselben Material wie der Schlauch bestehende Rippen, federnde Eigenschaften haben, damit der Schlauch problemlos in ein Metallrohr eingezogen und dort verklemmt werden kann.

Die LU-A-82 95 6 stellt außerdem einen extrudierten Schlauch dar, der zum Transport eines Wärmeträgers verwendet wird. Zur Vergrößerung der Oberfläche bei gleichzeitig konstanter statischer Festigkeit weist dieser ebenfalls aus einem Material bestehende Schlauch eine gewellte Oberfläche auf.

Des weiteren ist aus US-A-44 100 12 eine Schlauchanordnung bekannt, bei der der extrudierte aus Polyvenyl bestehende Schlauch mit einer Vielzahl von starren, aus hartem Polyvenyl bestehenden Stäben während der Extrusion schmelzverbunden wird.

Aus der US-A-37 20 235 ist ein aus Kunststoff bestehender extrudierter Schlauch bekannt, der am Innenumfang angeordnete Rippen aufweist.

Aus der FR-A-23 13 623 ist ein Verfahren bekannt, bei dem auf einem extrudierten Schlauch im nachhinein Rippen durch Schmelzverbindung befestigt werden. Der Grundkörper jenes bekannten Schlauchs kann aus einem Polyolefin, wie zum Beispiel aus Polybutylen, aus Polypropylen, aus Polyäthylen oder auch aus PVC bestehen. Als Werkstoffe für die Rippen nennt die FR-A-23 13 623 allgemein thermoplastische Werkstoffe, insbesondere Polypropylen oder Polyäthylen. Gemäß einem besonderen Ausführungsbeispiel der Fig. 1 und 2 bestehen Grundkörper und Rippen beide aus Polyäthylen. Die gemäß der FR-A-23 13 623 als verdrehsichere Werkzeugangriffsflächen kompakt, und zwar etwa mit halbkreisförmigem Querschnitt, ausgebildeten Rippen, wären nicht in der Lage, eine Geräuschdämpfung zu bewirken, d.h. lästige Klappergeräusche zu vermeiden.

Ausgehend von dem eingangs beschriebenen, mit axialen Außenrippen versehenen, Abfluß- bzw. Lüftungsschlauch dieser Gattung, liegt der Erfindung die Aufgabe zugrunde, einen hinsichtlich seiner akustischen Eigenschaften und hinsichtlich seiner Montierbarkeit verbesserten Schlauch zu schaffen.

Diese Aufgabe wurde entsprechend der Erfindung dadurch gelöst, daß die Rippen mit dem Schlauchkörper koextrudiert sind und aus chloriertem Polyäthylen bestehen. Nach einem bevorzugten Ausführungsbeispiel besitzt das chlorierte Polyäthylen, welches ohnehin von Haus aus eine wesentlich geringere Härte als das Weich-PVC des Schlauchkörpers (85-90 Shore A) aufweist, eine Härte von etwa 55-65 Shore A. Chloriertes Polyäthylen ist ein dem Weich-PVC ähnlicher Kunststoff, also mit diesem verschweiß- bzw. verschmelzbar, demnach auch mit Weich-PVC koextrudierbar. Die Koextrusion erfolgt in bekannter Weise derart, daß in demselben Extruderkopf in kurzer zeitlicher Aufeinanderfolge (ein Wegabstand von weniger als 3cm) zunächst der Schlauchkörper aus Weich-PVC und unmittelbar darauf, während der Schlauchkörper noch eine weiche bzw. schmelzflüssige Konsistenz aufweist, die Rippen im schmelzflüssigen Zustand durch Extrusion angeformt, d.h. koextrudiert, werden.

Aufgrund der im Vergleich zum Stand der Technik größeren Weichheit des chlorierten Polyäthylens läßt sich mit dem erfindungsgemäßen Schlauch eine tatsächliche Geräuschdämpfung gegenüber dem vorbekannten gattungsgemäßen Schlauch erzielen, dessen Dämfungseigenschaften lediglich auf der Formgebung, also auf der dünnquerschnittigen Rippenform an sich, basieren sollen. Demgegenüber beruhen die Geräuschdämpfungseigenschaften des erfindungsgemäßen Schlauchs nicht allein auf dem Vorhandensein radial vorstehender dünnwandiger Axialrippen, sondern die Geräuschdämpfungswirkung wird zusätzlich durch die Weichheit des Rippenwerkstoffs selbst verbessert.

Ein überraschender wichtiger Vorteil des erfindungsgemäßen Schlauchs besteht zudem darin, daß sich dieser im Zuge der Durchsteckmontage in höchst einfacher leichter Welse nahezu behinderungsfrei in die vorgesehenen Karosserie-Aufnahmeräume einschieben läßt. Dieser erhebliche Vorteil des erfindungsgemäßen Schlauchs läßt sich bei einem einfachen Vergleichsversuch wie folgt darstellen: Man legt eine bestimmte Abschnittslänge des eingangs beschriebenen, durch offenkundige Vorbenutzung bekanntgewordenen, Schlauchs auf eine Glasplatte und versucht, diesen mit der Hand in Richtung der Schlauch-Längsachse zu verschieben. Dies gelingt nur schwer, da der außenberippte Schlauch aus Weich-PVC gewissermaßen wie ein weicher Radiergummi auf der Glasoberfläche festklebt. Der mit den Axialrippen aus chloriertem Polyäthylen versehene erfindungsgemäße Schlauch derselben Abschnittslänge hingegen läßt sich vergleichsweise leicht in Schlauch-Längsrichtung über die Glasplatte schieben.

In der einzigen Zeichnung ist ein bevorzugtes Ausführungsbeispiel entsprechend der Erfindung anhand eines Schlauch- Querschnittes näher dargestellt.

In der Zeichnung ist der im Radialquerschnitt stark vergrößert dargestellte Abfluß- bzw. Lüftungsschlauch insgesamt mit der Bezugsziffer 10 versehen.

Der Schlauchkörper 11 besteht aus Weich-PVC mit einer Härte von etwa 85-90 Shore A.

Die stoffschlüssig koextrudierten, radial nach außen weisenden, relativ dünnwandigen Axialrippen 12 flachrechteckigen Querschnitts bestehen aus chloriertem Polyäthylen und weisen eine Härte von etwa 55-65 Shore A auf. Der Außendurchmesser Dₐ des Schlauchkörpers 11 beträgt etwa 17,5 mm, während dessen Innenduchmesser Dᵢ etwa 14,5 mm ausmacht. Die Wandstärke w des Schlauchkörpers 11 beläuft sich auf etwa 1,4 mm, während die radiale Rippenhöhe hᵣ etwa 2 mm beträgt. Die Stärke s der Rippen 12 mißt etwa 1-1,2 mm.

## Patentansprüche

1. Extrudierter knickfester durchsteckmontierbarer Abfluß- bzw. Lüftungsschlauch (10) aus PVC oder aus einem ähnlichen Thermoplast, zur Verlegung in Hohlräumen von Beförderungsmitteln, insbesondere von Kraftfahrzeug-Karosserien, wobei der Außenmantelfläche des Schlauchkörpers (11) sich in dessen Längsrichtung erstreckende, im wesentlichen radial nach außen vorragende, im Verhältnis zur Schlauchkörper-Wandung dünnwandige Rippen (12) angeformt sind, dadurch gekennzeichnet, daß die Rippen (12), mit dem Schlauchkörper (11) koextrudiert sind und aus chloriertem Polyäthylen bestehen.

2. Extrudierter Abfluß- bzw. Lüftungsschlauch nach Anspruch 1, dadurch gekennzeichnet, daß das chlorierte Polyäthylen eine Härte von etwa 55-65 Shore A aufweist.

## Claims

1. Extruded, non-buckling, push-through-assembly outlet or ventilating tube (10) made of PVC or a similar thermoplastic material for laying in hollow spaces in transport means, in particular in motor vehicle bodies, with ribs (12) being formed on the outer surface area of the tube body (11) which extend longitudinally of the tube body, project substantially radially outwards and are thin-walled compared to the wall of the tube body, characterized in that the ribs (12) are coextruded with the tube body (11) and are made of chlorinated polyethylene.

2. Extruded outlet or ventilating tube according to claim 1, characterized in that the chlorinated polyethylene has a hardness of around 55-65 Shore A.

## Revendications

1. Tuyau (10) d'écoulement ou d'aération extrudé en PVC ou en un thermoplastique analogue, qui est résistant au flambage et peut être monté en traversée de paroi pour la pose dans des cavités de moyens de transport, en particulier de carrosseries de véhicules automobiles, étant entendu que des nervures (12) qui sont d'une épaisseur de paroi relativement mince par rapport à la paroi du corps de tuyau, s'étendent dans le sens de la longueur de ce dernier et font saillie essentiellement dans le sens radial vers l'extérieur, sont moulées sur la surface d'enveloppe extérieure du corps (11) de tuyau,
caractérisé par le fait que les nervures (12) sont coextrudées avec le corps (11) du tuyau et se composent de polyéthylène chloré.

2. Tuyau d'écoulement ou d'aération extrudé suivant la revendication 1,
caractérisé par le fait que le polyéthylène chloré présente une dureté de 55 à 65 Shore A à peu près.
